# EUROPEAN PATENT APPLICATION

(11) **EP 4 794 055 A1**
(43) Date of publication of application: **19.08.2026**
(21) Application number: 26154378.9
(22) Date of filing: 27.01.2026
(51) Int. Cl.: H01M 10/48, H01M 10/6556, H01M 50/103, H01M 50/209, H01M 10/6564, H01M 10/6568

(54) **SECONDARY BATTERY AND SECONDARY BATTERY MODULE INCLUDING THE SAME**

(30) Priority: 13.02.2025 KR 20250018694
(71) Applicant: SAMSUNG SDI CO., LTD., Yongin-si, Gyeonggi-do 17084 (KR)
(72) Inventor: Moon, Taewon, 17084 Yongin-si, Gyeonggi-do (KR)
(74) Representative: Meissner Bolte Partnerschaft mbB

(57) **Abstract**

A secondary battery (100), including an electrode assembly (120), a case (110) that accommodates the electrode assembly (120), the case (110) including an opening at at least one side, and a cap plate (130) that seals the opening, wherein the case (110) includes an inner wall (111), an outer wall (112) spaced apart from and surrounding the inner wall (111), a space portion between the inner wall (111) and the outer wall (112), and a connection wall (113) connecting the inner wall (111) and the outer wall (112), the connection wall (113) sealing an upper end of the space portion.

## Description

### BACKGROUND

### 1. Field

The present invention relates to a secondary battery and a secondary battery module including the secondary battery.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The above information disclosed in this background section is for enhancement of understanding of the background of the present invention, and therefore, it may contain information that does not constitute related (or prior) art.

### SUMMARY OF THE INVENTION

The present invention is directed to a secondary battery, including an electrode assembly, a case that accommodates the electrode assembly, the case including an opening at at least one side, and a cap plate that seals the opening, wherein the case includes an inner wall, an outer wall spaced apart from and surrounding the inner wall, a space portion between the inner wall and the outer wall, and a connection wall connecting the inner wall and the outer wall, the connection wall sealing an upper end of the space portion.

Each of the inner wall and the outer wall may include a bottom surface and four side surfaces that extend vertically from the bottom surface.

The case may include a first port through which a liquid flows in and out, and a second port through which a gas flows in and out.

The first port may be on one side surface of the outer wall.

The first port may be on a bottom surface of the outer wall.

The second port may be on the connection wall.

The cap plate may include a third port connected to the second port.

The cap plate may be in face-to-face contact with the connection wall.

The present invention is directed to a secondary battery module, including a plurality of secondary batteries, a plurality of liquid supply tanks configured to supply a liquid to cases of the respective plurality of secondary batteries, and a flow path connected to the cases of the respective plurality of secondary batteries, the flow path communicating with an outside, wherein each of the plurality of secondary batteries includes an electrode assembly, a case that accommodates the electrode assembly, the case including an opening at at least one side, and a cap plate that seals the opening, and wherein the case includes an inner wall, an outer wall spaced apart from and surrounding the inner wall, a space portion between the inner wall and the outer wall, and a connection wall connecting the inner wall and the outer wall, the connection wall sealing an upper end of the space portion.

The case may include a first port connected to any one of the plurality of liquid supply tanks, a liquid flowing in and out of the first port, and a second port connected to the flow path, a gas flowing in and out of the second port.

The cap plate may include a third port connected to the second port.

The flow path may be connected to the third port.

The secondary battery module may further include a sealing member between the flow path and the third port.

A bottom surface of the case of each of the plurality of secondary batteries may be at a level lower than an upper surface of the plurality of liquid supply tanks.

The plurality of liquid supply tanks may be at a lower end of the plurality of secondary batteries, and the plurality of liquid supply tanks may each include a lift controlling a flow rate of the liquid supplied to the case.

The secondary battery module may further include a valve controlling a flow rate of a gas supplied through the flow path.

The secondary battery module may further include a measuring unit configured to measure at least one of a pressure and a temperature of each of the plurality of secondary batteries.

The secondary battery module may further include a battery management system that monitors and manages an operating state of the plurality of secondary batteries based on at least one of the pressure and the temperature measured by the measuring unit.

The battery management system may control a flow rate of the liquid supplied from the plurality of liquid supply tanks to the case based on at least one of the measured pressure and temperature.

The battery management system may control a flow rate of the gas passing through the flow path based on at least one of the measured pressure and temperature.

These and other aspects and features of the present invention will be described in or will be apparent from the following description of embodiments of the present invention.

However, aspects and features of the present invention are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present invention, and further describe aspects and features of the present invention together with the detailed description of the present invention. Thus, the present invention should not be construed as being limited to the drawings.

Features will become apparent to those of ordinary skill in the art by describing in detail exemplary embodiments with reference to the attached drawings, in which:
FIG. 1 is a perspective view illustrating a secondary battery according to the present invention;
FIG. 2 is a cross-sectional view illustrating a secondary battery according to the present invention, and is a cross-sectional view taken along line A-A' of the secondary battery shown in FIG. 1;
FIG. 3 illustrates a bottom surface of a secondary battery according to an embodiment of the present invention;
FIG. 4 illustrates a top surface of a secondary battery according to an embodiment of the present invention;
FIG. 5 illustrates a side surface of a secondary battery according to an embodiment of the present invention;
FIG. 6 illustrates a side surface of a secondary battery according to an embodiment of the present invention;
FIG. 7 illustrates a side surface of a secondary battery according to an embodiment of the present invention;
FIG. 8 is a cross-sectional view illustrating a secondary battery module according to the present invention;
FIG. 9 is a block diagram illustrating a configuration of a secondary battery module according to an embodiment of the present invention; and
FIG. 10 is a block diagram illustrating a configuration of a secondary battery module according to an embodiment of the present invention.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this invention will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

Hereinafter, embodiments of the present invention will be described in detail with reference to the accompanying drawings. The terms or words used in this specification and claims should not be construed as being limited to the usual or dictionary meaning and should be interpreted as meaning and concept consistent with the technical idea of the present invention based on the principle that the inventor can be his/her own lexicographer to appropriately define the concept of the term to explain his/her invention in the best way.

The embodiments described in this specification and the configurations shown in the drawings are only some of the embodiments of the present invention and do not represent all of the technical ideas, aspects, and features of the present invention. Accordingly, it should be understood that there may be various equivalents and modifications that can replace or modify the embodiments described herein at the time of filing this application.

It will be understood that when a layer or element is referred to as being "between" two layers, it can be the only layer between the two layers, or one or more intervening layers may also be present. It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present invention relates to "one or more embodiments of the present invention." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present invention and is not intended to be limiting of the present invention. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5 % or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with an upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked," or "connected" to each other, or another component may be "interposed" between the components.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in this specification are for describing embodiments of the present invention and are not intended to limit the scope of the invention.

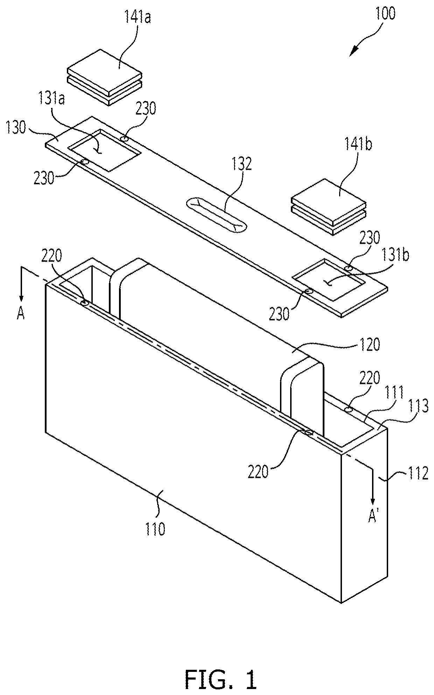

FIG. 1 is a perspective view illustrating a secondary battery 100 according to an embodiment of the present invention.

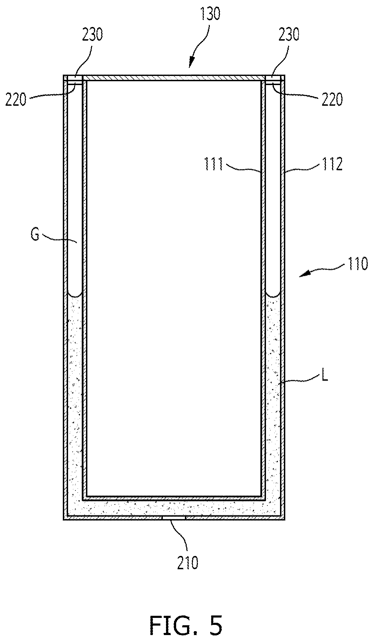

Referring to FIG. 1, a secondary battery 100 according to an embodiment of the present invention may include: an electrode assembly 120; a case 110 that accommodates the electrode assembly 120 and includes an opening at at least one side; and a cap plate 130 that seals the opening, wherein the case 110 may include: an inner wall 111; an outer wall 112 spaced apart from and surrounding the inner wall 111; a space portion formed between the inner wall 111 and the outer wall 112 (see FIGS. 5-7); and a connection wall 113 that connects the inner wall 111 and the outer wall 112 and seals an upper end of the space portion.

The electrode assembly 120 may be formed by winding or stacking a stack of a first electrode plate, a separator, and a second electrode plate, which are formed as thin plates or films. When the electrode assembly 120 is a wound stack, a winding axis may be parallel to a longitudinal direction (e.g., a y direction) of the case 110. In other embodiments, the electrode assembly 120 may be a stack type rather than a winding type, and a shape of the electrode assembly 120 is not limited in the present invention. In addition, the electrode assembly 120 may be a Z-stack electrode assembly in which a positive electrode plate and a negative electrode plate are inserted into both sides of a separator, which is then bent into a Z-stack. In addition, one or more of the electrode assembly 120 may be stacked such that long sides of a plurality of the electrode assembly 120 are adjacent to each other and accommodated in the case 110, and a number of the electrode assembly 120 in the case 110 is not limited in the present invention. The first electrode plate of the electrode assembly 120 may act as a negative electrode, and the second electrode plate may act as a positive electrode. Of course, the reverse is also possible. Therefore, the first electrode plate of the electrode assembly may act as a positive electrode, and the second electrode plate may act as a negative electrode.

The first electrode plate may be formed by applying a first electrode active material, such as graphite or carbon, to a first electrode current collector formed of a metal foil, such as copper, a copper alloy, nickel, or a nickel alloy. The first electrode plate may include a first electrode tab (e.g., a first uncoated portion) that is a region to which the first electrode active material is not applied. The first electrode tab may act as a current flow path between the first electrode plate and the first electrode current collector. In some embodiments, when the first electrode plate is manufactured, the first electrode tab may be formed by being cut in advance to protrude to one side of the electrode assembly, or the first electrode tab may protrude to one side of the electrode assembly farther than the separator without being separately cut.

The second electrode plate may be formed by applying a second electrode active material, such as a transition metal oxide, to a second electrode current collector formed of a metal foil, such as aluminum or an aluminum alloy. The second electrode plate may include a second electrode tab (e.g., a second uncoated portion) that is a region to which the second electrode active material is not applied. The second electrode tab may act as a current flow path between the second electrode plate and the second electrode current collector. In some embodiments, the second electrode tab may be formed by being cut in advance to protrude to an opposite side of the electrode assembly when the second electrode plate is manufactured, or the second electrode tab may protrude to the opposite side of the electrode assembly farther than the separator without being separately cut.

The separator may include a porous substrate and a coating layer including an organic material, an inorganic material, or a combination thereof on one or both surfaces of the porous substrate.

The porous substrate may be a polymer film formed of any one selected polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y2O₃, SrTiO₃, BaTiO₃, Mg(OH)₂, boehmite, and a combination thereof, but is not limited thereto.

The organic material and the inorganic material may be mixed in one coating layer, or a coating layer including an organic material and a coating layer including an inorganic material may be stacked.

The case 110 may form an overall exterior of the secondary battery 100. As a specific example, the secondary battery 100 may be a prismatic battery. In this case, the case 110 of the secondary battery 100 may have a substantially rectangular-parallelepiped shape, but the type and shape of the secondary battery 100 may vary.

One end of the case 110 may be open, and a receiving space for accommodating the electrode assembly 120 may be formed inside the case 110. An open side of the case 110 may be an upper surface, a side surface, or a bottom surface of the case 110, and FIG. 1 illustrates a case 110 whose upper surface is open according to an embodiment.

The case 110 may have a rectangular-parallelepiped shape with one open end. According to an embodiment of the present invention, each of the inner wall 111 and the outer wall 112 of the case 110 may include a bottom surface and four side surfaces that extend vertically from the bottom surface. For example, the outer wall 112 may form an outermost portion of the case 110 and may be provided as a box shape including two opposing long sides and two opposing short sides, with one end open.

Meanwhile, the inner wall 111 may be disposed spaced apart from the outer wall 112 at a predetermined interval, and a predetermined space portion may be formed between the inner wall 111 and the outer wall 112. For example, like the outer wall 112, the inner wall 111 may include two opposing long sides and two opposing short sides and may be provided as a box shape with one end open.

The open end of the inner wall 111 and the open end of the outer wall 112 may be formed on the same plane. Except for an area in which the open ends of the case 110 overlap each other, the outer wall 112 may be configured to surround the inner wall 111. Accordingly, the electrode assembly 120 may be disposed inside the case 110 such that the electrode assembly 120 is supported by the bottom of the inner wall 111 of the case 110 and is surrounded by the four side walls of the inner wall 111.

A liquid and/or a gas may flow in and out of the space portion (see FIGS. 5-7) present between the inner wall 111 and the outer wall 112, and the introduced liquid and/or gas may fill all or part of the space portion.

Meanwhile, at the open ends of the inner wall 111 and the outer wall 112, a connection wall 113 that connects the inner wall 111 and the outer wall 112 and seals an upper end of the space portion may be disposed.

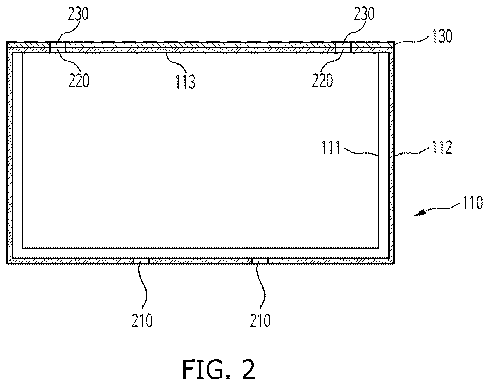

Specific configurations and functions of the case 110 and the cap plate 130 will be described in detail with reference to FIGS. 2 to 4.

The cap plate 130 may be coupled to the opening of the case 110 to seal the case 110. For example, the cap plate 130 may be in face-to-face (i.e., direct) contact with and coupled to the connection wall 113 of the case 110, thereby sealing the open end of the case 110.

The cap plate 130 may include: a first electrode terminal hole 131a that corresponds to a first electrode terminal 141a and penetrates the cap plate 130; and a second electrode terminal hole 131b that corresponds to a second electrode terminal 141b and penetrates the cap plate 130. In addition, the cap plate 130 may further include a vent portion 132 disposed between the first electrode terminal hole 131a and the second electrode terminal hole 131b.

The vent portion 132 may be designed to have a relatively weak strength so as to release an internal pressure when the internal pressure of the case 110 accumulates to a preset critical point or more. The vent portion 132 may be ruptured under an internal pressure equal to or greater than the critical point to release the internal pressure and may prevent an explosion or ignition caused by the accumulation of the internal pressure in advance.

The vent portion 132 may be coupled to a vent hole (e.g., surrounding the vent portion 132) penetrating the cap plate 130 in a state in which the vent portion 132 is inserted into the vent hole. Accordingly, the vent hole may be sealed by the vent portion 132. When the vent portion 132 is ruptured, an emission may be discharged to the outside of the case 110 through the vent hole. The emission may include vent gas, explosion pressure, flame, and debris.

In FIG. 1, one of the vent portion 132 is illustrated at a center of the cap plate 130; however, a number and a position of the vent portion 132 may be variously determined as needed in consideration of a shape of the cap plate 130, an internal pressure, or a capacity. For example, the cap plate 130 may include a plurality of the vent portion 132. The plurality of the vent portion 132 may be provided to be opened when the internal pressure of the case 110 reaches a set pressure and may be arranged along a longitudinal direction of the cap plate 130.

The first electrode terminal 141a and the second electrode terminal 141b may be coupled to the cap plate 130. The first electrode terminal 141a and the second electrode terminal 141b may be disposed on one side of the cap plate 130 at a predetermined interval, as in a conventional secondary battery. Positions of the first electrode terminal 141a and the second electrode terminal 141b according to the present invention other than that illustrated in FIG. 1 and may have various modifications.

The first electrode terminal 141a and the second electrode terminal 141b may protrude outward through the cap plate 130. Here, the first electrode terminal 141a may be electrically connected to a first electrode, and the second electrode terminal 141b may be electrically connected to a second electrode. Of course, the reverse is also possible.

The cap plate 130 may include an electrolyte injection port. For example, the electrolyte injection port may be a through-hole formed in the cap plate 130. In addition, the electrolyte injection port may be formed to inject an electrolyte into the case 110 after the cap plate 130 is coupled to and seals the opening of the case 110. After the electrolyte is injected, the electrolyte injection port may be sealed with a sealing member.

The case 110 may be formed of a metallic material such as stainless steel (SUS), aluminum, an aluminum alloy, or nickel-plated steel. However, this is exemplary, and the case 110 may be configured of various metallic materials that satisfy strength required for the secondary battery 100 and resistance to an external impact.

Although only an example in which the secondary battery is a prismatic battery is illustrated in FIG. 1, a type of the secondary battery may be a cylindrical battery, a pouch battery, or any other battery. In this case, a protective member may be formed between the electrode assembly and at least one surface of the case, and a position of the protective member may be appropriately changed depending on a type of the case.

Hereinafter, configurations of the case 110 and the cap plate 130 will be described in detail with reference to FIGS. 2 to 4.

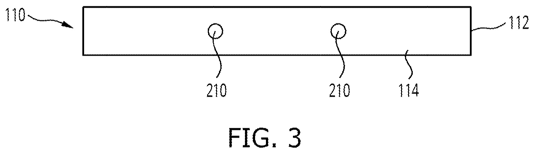

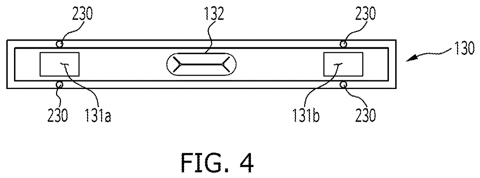

FIG. 2 is a cross-sectional view illustrating a secondary battery according to an embodiment of the present invention, and is a cross-sectional view taken along line A-A' of the secondary battery shown in FIG. 1. FIG. 3 illustrates a bottom surface of a secondary battery according to an embodiment of the present invention. FIG. 4 illustrates a top surface of a secondary battery according to an embodiment of the present invention.

Referring to FIG. 2, a case 110 of a secondary battery according to an embodiment of the present invention may include a first port 210 through which a liquid flows in and out and a second port 220 through which a gas flows in and out.

The first port 210 may be formed on one side surface of the outer wall 112; however, a position where the first port 210 is formed may vary. For example, as illustrated in FIG. 2, the first port 210 may be formed on a bottom surface of the outer wall 112. When the first port 210 is formed on the bottom surface of the case 110, a liquid may be introduced into the space portion between the inner wall 111 and the outer wall 112 by using a pump or a lift during inflow of the liquid, and the liquid may be discharged to the outside of the case 110 of the secondary battery without a separate device by gravity during discharge of the liquid.

Referring to FIG. 3, although a shape of the first port 210 is illustrated as a circle, the shape of the first port 210 may have a polygonal or elliptical shape.

The first port 210 may be formed only on one side surface of the outer wall 112 and may not be formed in the inner wall 111. Accordingly, a liquid that flows in and out through the first port 210 may flow in and out only of the space portion between the inner wall 111 and the outer wall 112, and inflow and outflow of the liquid in a space in which an electrode assembly surrounded by the inner wall 111 is accommodated may be prevented.

In FIG. 3, two of the first port 210 are illustrated; however, the number of the first port 210 may vary. As the number of the first port 210 increases, an inflow/outflow amount and an inflow/outflow speed of the liquid may increase, and thus an internal pressure control and a temperature control of the cell may be performed more quickly.

Referring again to FIG. 2, the second port 220 may be formed on the connection wall 113. Accordingly, a gas that flows in and out through the second port 220 may flow in and out only of the space portion between the inner wall 111 and the outer wall 112, and inflow and outflow of the liquid in a receiving space in which an electrode assembly surrounded by the inner wall 111 is present may be prevented.

Meanwhile, the cap plate 130 may be disposed on the connection wall 113. The cap plate 130 may include a third port 230 that is connected to (e.g., in fluid communication with) the second port 220.

In FIG. 2, the connection wall 113 is illustrated as being formed on an upper end of the case 110; however, the connection wall 113 may be formed on a side surface or a bottom surface of the case 110. Accordingly, the second port 220 may also be formed on a side surface or a bottom surface of the case 110. As illustrated in FIG. 2, when the connection wall 113 is formed on the upper end of the case 110 and the second port 220 is formed on the upper end of the case 110, a gas may be introduced into the space portion between the inner wall 111 and the outer wall 112 by using a gas supplier during inflow of the gas, and the gas may be discharged to the outside of the case 110 of the secondary battery by using an internal pressure of the secondary battery and a density of the gas without a separate device during discharge of the gas.

The second port 220 and the third port 230 may have corresponding shapes (e.g., same shapes overlapping each other). For example, the second port 220 and the third port 230 may have a circular shape. However, shapes of the second port 220 and the third port 230 may have a polygonal or elliptical shape.

Meanwhile, if a passage through which a gas may flow is provided by connecting the second port 220 and the third port 230 to each other, shapes of the second port 220 and the third port 230 may be different from each other. For example, the second port 220 may have a triangular shape, whereas the third port 230 may have an elliptical shape.

Referring to FIG. 4, although four of the third port 230 formed in the cap plate 130 are illustrated, the number of the third port 230 may vary. As the number of the third port 230 increases, an inflow/outflow amount and an inflow/outflow speed of the gas may increase, and thus an internal pressure control and a temperature control of the cell may be performed more quickly.

In addition, in FIG. 4, the position where the third port 230 is formed is illustrated as being at portions adjacent to the first electrode terminal hole 131a and the second electrode terminal hole 131b; however, the position may vary. If the third port 230 is connected to the second port to provide a passage through which gas may flow, the third port 230 may be formed at any position of the cap plate 130.

FIGS. 5 to 7 illustrate side surfaces of a secondary battery according to an embodiment of the present invention.

Referring to FIG. 5, a liquid L and a gas G may be introduced into the space portion present between the inner wall 111 and the outer wall 112 of the case 110. The liquid L may be introduced through the first port 210, and the gas G may be introduced through the second port 220 and the third port 230. In addition, the liquid L may be discharged through the first port 210, and the gas G may be discharged through the second port 220 and the third port 230. Inflow and outflow amounts of the liquid L and the gas G may be adjusted in a direction of suppressing a rapid increase in an internal pressure and a temperature of the secondary battery.

The liquid L may include at least one of water, ethylene glycol, propylene glycol, chlorofluorocarbon (CFC), hydrochlorofluorocarbon (HCFC), hydrofluorocarbon (HFC), liquid nitrogen, liquid helium, oil, and combinations thereof, but the liquid L may vary. For example, the liquid L may be water having a temperature of about 5 °C or less.

The gas G may include at least one of ambient air, nitrogen, helium, neon, argon, hydrogen, and oxygen, but the gas may vary. For example, the gas G may be an inert gas, such as helium, neon, or argon, that hardly chemically reacts with another substance.

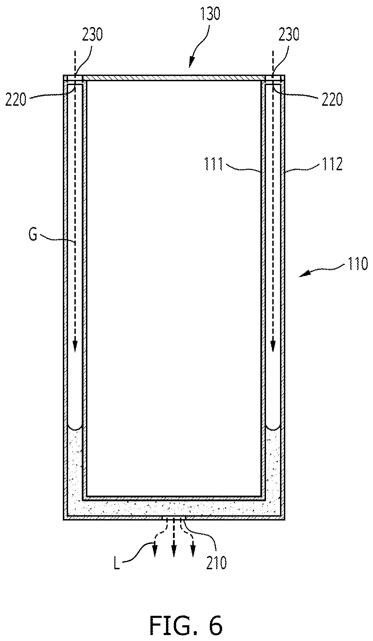

Referring to FIG. 6, when a temperature inside the secondary battery rises, the gas G may be introduced into the space portion present between the inner wall 111 and the outer wall 112 through the second port 220 and the third port 230, and the liquid L may be discharged from the space portion present between the inner wall 111 and the outer wall 112 through the first port 210. As the gas G is introduced into the space portion and occupies a larger portion of the space portion than the liquid L, the liquid L may be discharged to the outside of the first port 210. In this process, the gas G may move from an upper portion to a lower portion of the space portion and may reduce the temperature inside the secondary battery by air cooling. For example, while the liquid L whose temperature has risen due to heat generated inside the case 110 is discharged to the outside of the first port 210, the gas G cooled in advance may be introduced into the space portion present between the inner wall 111 and the outer wall 112 through the second port 220 and the third port 230, whereby the temperature inside the secondary battery may decrease.

In addition, even when an internal pressure of the secondary battery increases due to swelling, as the liquid L is discharged from the space portion present between the inner wall 111 and the outer wall 112 through the first port 210, a larger amount of the gas G may be introduced through the second port 220 and the third port 230. Accordingly, swelling resistance of the secondary battery may increase to suppress swelling.

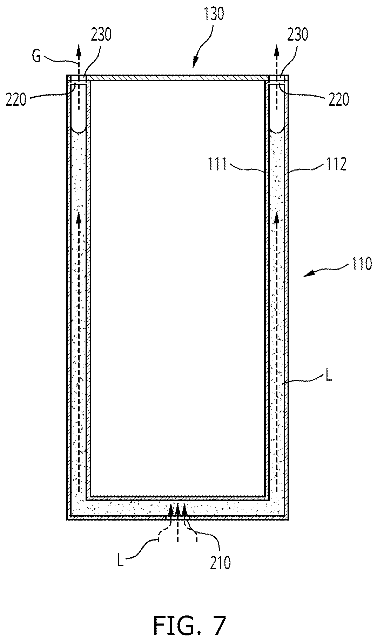

Referring to FIG. 7, when a temperature inside the secondary battery rises, the liquid L may be introduced into the space portion present between the inner wall 111 and the outer wall 112 through the first port 210, and the gas G may be discharged from the space portion present between the inner wall 111 and the outer wall 112 through the second port 220 and the third port 230. As the liquid L is introduced into the space portion and occupies a larger portion of the space portion than the gas G, the gas G may be discharged to the outside of the third port 230. In this process, the liquid L may move from a lower portion to an upper portion of the space portion and may reduce the temperature inside the secondary battery by water (e.g., more generally, liquid) cooling. For example, while the gas G whose temperature has risen due to heat generated inside the case 110 is discharged to the outside of the second port 220 and the third port 230, the liquid L cooled in advance may be introduced into the space portion present between the inner wall 111 and the outer wall 112 through the first port 210, whereby the temperature inside the secondary battery may decrease.

In addition, even when an internal pressure of the secondary battery increases due to swelling, as the gas G is discharged from the space portion present between the inner wall 111 and the outer wall 112 through the second port 220 and the third port 230, a larger amount of the liquid L may be introduced through the first port 210. Accordingly, swelling resistance of the secondary battery may increase to suppress swelling.

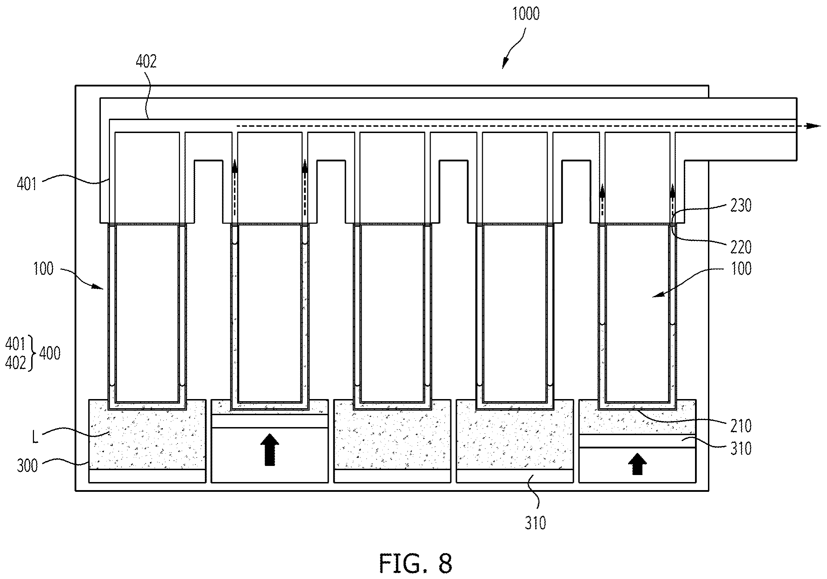

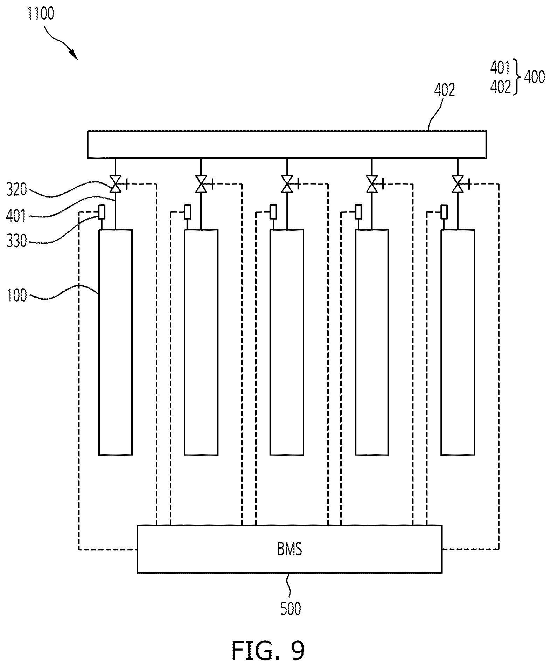

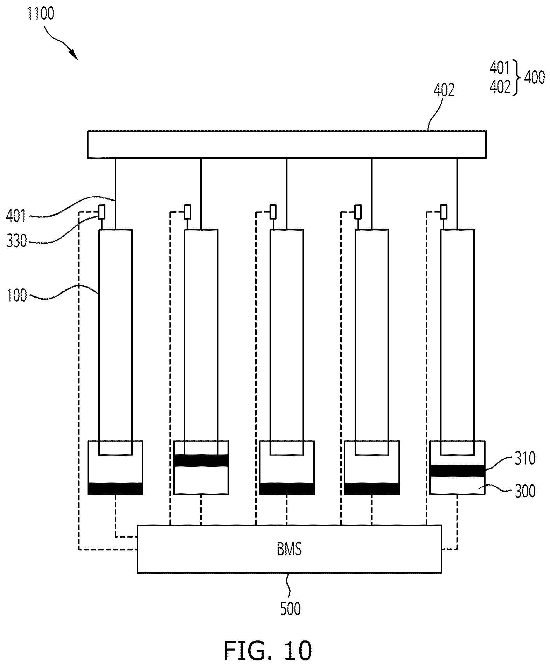

FIG. 8 is a cross-sectional view illustrating a secondary battery module 1000 according to an embodiment of the present invention. FIGS. 9 and 10 are block diagrams illustrating configurations of a secondary battery module 1000 according to an embodiments of the present invention.

Referring to FIG. 8, a secondary battery module 1000 according to an embodiment of the present invention may include: a plurality of secondary batteries 100; and a plurality of liquid supply tanks 300 configured to supply a liquid L to cases of the respective plurality of secondary batteries 100. In addition, the secondary battery module 1000 may further include a flow path 400 connected to the cases of the respective plurality of the secondary battery 100 and communicating with the outside. Each of the plurality of the secondary battery 100 may include: an electrode assembly; a case that accommodates the electrode assembly and includes an opening at at least one side; and a cap plate that seals the opening. The case may include: an inner wall; an outer wall spaced apart from and surrounding the inner wall; a space portion formed between the inner wall and the outer wall; and a connection wall that connects the inner wall and the outer wall and seals an upper end of the space portion.

The same content described above with reference to FIG. 1 may be applied to the plurality of the secondary battery 100 included in the secondary battery module 1000.

According to an embodiment of the present invention, the case included in each of the plurality of the secondary battery 100 may include the first port 210, which is connected to any one of the plurality of liquid supply tanks 300 and through which the liquid L flows in and out, and a second port 220, which is connected to the flow path 400 and through which a gas flows in and out.

Each of the plurality of liquid supply tanks 300 may serve to supply the liquid L to the space portion formed between the inner wall and the outer wall of the secondary battery when a temperature or a pressure inside the secondary battery increases and it is necessary to suppress the increase. In addition, when it is necessary to supply a gas to the space portion of the secondary battery 100, the liquid L may be discharged from the space portion of the secondary battery to the relevant plurality of the liquid supply tanks 300.

Each of the plurality of liquid supply tanks 300 may have one open end so as to accommodate a lower portion of the plurality of the secondary battery 100 and may include a bottom surface and four side surfaces extending vertically from the bottom surface. An area of the bottom surface of each of the plurality of liquid supply tanks 300 may be larger than an area of the bottom surface of the secondary battery 100.

However, a shape of each of the plurality of liquid supply tanks 300 may be any shape as long as each of the plurality of liquid supply tanks 300 may accommodate the secondary battery 100. For example, each of the plurality of liquid supply tanks 300 may have a closed rectangular parallelepiped shape with no open end. In this case, each of the plurality of liquid supply tanks 300 may be disposed so as not to contact the secondary battery 100 and may supply the liquid L by being connected to the first port 210 of the secondary battery 100 through a pipe, a pump, or the like.

According to an embodiment of the present invention, a bottom surface of the case of each of the plurality of the secondary battery 100 may be positioned at a level lower than an upper surface of the plurality of liquid supply tanks 300. However, a position of the liquid supply tank 300 may be any position as long as the liquid L may be supplied to the space portion of the secondary battery 100.

When the bottom surface of the case of each of the plurality of the secondary battery 100 is positioned at a level lower than the upper surface of the plurality of liquid supply tanks 300, the plurality of liquid supply tanks 300 may be disposed at the bottom of the plurality of secondary batteries 100. In addition, each of the plurality of liquid supply tanks 300 may include a lift 310 that controls a flow rate of the liquid L supplied to the case.

The lift 310 may serve to push up the liquid L toward the first port 210 formed at the lower end of the secondary battery 100. Accordingly, the liquid L may be supplied from the liquid supply tank 300 to the space portion formed between the inner wall and the outer wall of the secondary battery 100 through the first port 210. The lift 310 may have a movable range from a bottom surface of the liquid supply tank 300 to a bottom surface of the secondary battery 100 where the first port 210 is located. The lift 310 may have an area corresponding to an area of the bottom surface of the liquid supply tank 300 and, accordingly, may seal the open end of the liquid supply tank 300. The lift 310 may be connected to a lifting device (e.g., a linear motor, a hydraulic cylinder) that may raise and lower the lift 310, but a driving device of the lift 310 may vary.

The type of liquid (L) that can be used in the liquid supply tank (300) is the same as what was described above with reference to FIG. 5.

The flow path 400 may be a passage through which a gas flows and may be connected to the third port 230. Accordingly, when a temperature or a pressure inside the secondary battery increases and it is necessary to suppress the increase, the flow path 400 may serve to supply a gas to the space portion formed between the inner wall and the outer wall of the secondary battery. In addition, when it is necessary to supply the liquid L to the space portion of the secondary battery 100, the gas may be discharged to the outside from the space portion of the secondary battery through the flow path 400.

The flow path 400 may be connected to the third port 230 of the secondary battery 100 and may extend in a vertical direction. The flow path 400 extending in the vertical direction may communicate with the outside to discharge the gas to the outside or to introduce the gas from the outside into the space portion of the secondary battery 100.

To this end, the flow path 400 may include a first flow path 401 that is connected to the third port 230 of the secondary battery 100 and extends in a vertical direction, and a second flow path 402 that is connected to the first flow path 401 and communicates with the outside. The second flow path 402 may extend in a direction intersecting or perpendicular to a longitudinal direction of the first flow path 401. The second flow path 402 may communicate with the plurality of the first flow path 401 connected to the plurality of the secondary battery 100, and may serve as a passage through which the gas discharged from the plurality of the first flow path 401 is discharged to the outside or the gas introduced from the outside is supplied to the space portion of the secondary battery 100 through the plurality of the first flow path 401.

According to an embodiment of the present invention, a sealing member may be disposed between the flow path 400 and the third port 230. The sealing member may seal a connection portion between the third port 230 and the flow path 400 and may thus prevent the gas that flows in and out through the flow path 400 from escaping to a space other than the flow path.

Referring to FIG. 9, a secondary battery module 1100 according to an embodiment of the present invention may further include a valve 320 that controls the flow rate of the gas supplied through the first flow path 401. The valve 320 is connected to the flow path 400 to control the supply and discharge of the gas. For example, a plurality of the valve 320 may be installed in the first flow path 401 connected to each of the plurality of secondary batteries 100, and in this case, only the secondary battery 100 connected to an open valve may allow inflow and outflow of the gas.

The flow path 400 may include a plurality of the first flow path 401 connected to multiples of the third port 230 of the plurality of the secondary battery 100 and extending in a vertical direction, and a second flow path 402 that is connected to the plurality of the first flow path 401 and communicates with the outside. In this case, the plurality of the valve 320 may be installed in the plurality of the first flow path 401 corresponding thereto. With this configuration, a flow rate of the gas that flows in and out through the respective of the plurality of the first flow path 401 may be individually controlled through the plurality of the valve 320.

Meanwhile, when the flow path 400 is connected to the third port 230 of the secondary battery 100 and extends in the vertical direction, the valve 320 may be connected to any position of the flow path 400.

A secondary battery module 1100 according to an embodiment of the present invention may further include a measuring unit 330 that measures at least one of a pressure and a temperature of each of the plurality of the secondary battery 100. For example, the measuring unit 330 may include at least one of a thermometer, a pressure gauge, and a shock sensor. The measuring unit 330 may be installed at an upper end of the secondary battery 100 (in the configuration shown in FIG. 9); however, the measuring unit 330 may also be installed in the space portion of the case or inside the case of the secondary battery 100.

A secondary battery module 1100 according to an embodiment of the present invention may further include a battery management system (BMS) 500 that monitors and manages an operating state of the plurality of the secondary battery 100 based on at least one of the pressure and the temperature measured by the measuring unit 330. The battery management system 500 may be connected to the measuring unit 330 installed in the secondary battery 100 and may receive information on a state of the secondary battery 100 from the measuring unit 330. Accordingly, the battery management system 500 may estimate a state of a secondary battery cell installed in the secondary battery module 1100 and may protect the plurality of the secondary battery 100 from operating outside a safe operating region using the estimated state information. Operation outside the safe operating region may occur when an over-current, an over-voltage (during charging), an over-temperature, a low temperature, an over-pressure, a ground fault, or a leakage current is detected.

The battery management system 500 may control a flow rate of the gas passing through the flow path 400 based on at least one of the measured pressure and temperature. The battery management system 500 may control opening and closing of the valve 320 installed in the flow path 400, whereby a flow rate of the gas may be controlled.

Specifically, when the secondary battery 100 is overheated or an internal pressure of the secondary battery 100 increases due to an abnormal event occurring in the secondary battery 100, the measuring unit 330 may transmit information such as the pressure and the temperature of the secondary battery 100 measured by the measuring unit 330 to the battery management system 500. When the measured value exceeds a predetermined threshold, the battery management system 500 may open the valve 320 connected to the secondary battery 100 from which the measured value is obtained. When the valve 320 is opened, a gas may be injected into the space portion formed between the inner wall and the outer wall of the secondary battery 100 or a gas may be discharged from the space portion to secure safety of the secondary battery 100.

Referring to FIG. 10, the battery management system 500 of the secondary battery module 1100 may control a flow rate of the liquid supplied from the plurality of liquid supply tanks 300 to the case based on at least one of the measured pressure and temperature.

The battery management system 500 may control a flow rate of the liquid that flows in and out of the liquid supply tank 300 based on at least one of the measured pressure and temperature. For example, the battery management system 500 may control opening and closing of the lift 310 (e.g., may control a position of the lift 310) installed in the liquid supply tank 300, whereby a flow rate of the liquid may be controlled.

Specifically, when the secondary battery 100 is overheated or an internal pressure of the secondary battery 100 increases due to an abnormal event occurring in the secondary battery 100, the measuring unit 330 may transmit information such as the pressure and the temperature of the secondary battery 100 measured by the measuring unit 330 to the battery management system 500. When the measured value exceeds a threshold, the battery management system 500 may move the lift 310 connected to the secondary battery 100 from which the measured value is obtained. When the lift 310 rises, a liquid may be injected into the space portion formed between the inner wall and the outer wall of the secondary battery 100, and when the lift 310 descends, the liquid may be discharged from the space portion formed between the inner wall and the outer wall of the secondary battery 100, whereby an internal temperature, a pressure, and the like of the secondary battery 100 may be controlled.

Other content related to the battery management system 500 is the same as described with reference to FIG. 9.

When a secondary battery is used for a long period of time, swelling of a cell may occur during charging and discharging. The swelling of the cell may lead to safety risks, such as deterioration of the service life of the secondary battery and fracture of the case. In addition, when the secondary battery is exposed to a high-temperature environment, thermal runaway in which the internal temperature of the battery rises rapidly may occur. Particularly, in a secondary battery module, high-temperature gas and debris generated by thermal runaway may propagate to adjacent cells and cause significant damage to the entire secondary battery module.

According to some embodiments of the present invention, by forming a space portion in the case of the secondary battery through which the liquid and the gas may flow in and out so as to adjust an internal pressure of the secondary battery, swelling generated during charging and discharging of the secondary battery may be prevented, and accordingly, a service-life characteristic of the secondary battery may be improved.

In addition, according to some embodiments of the present invention, by controlling a temperature of the secondary battery through the liquid and the gas flowing in and out through the space portion of the case, heat transfer to adjacent cells in the secondary battery module may be blocked and thermal runaway may be prevented.

Although the present invention has been described above with respect to embodiments thereof, the present invention is not limited thereto. Various modifications and variations can be made thereto by those skilled in the art within the spirit of the present invention and the equivalent scope of the appended claims.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the spirit and scope of the present invention as set forth in the following claims.

## Claims

1. A secondary battery (100), comprising:
an electrode assembly (120);
a case (110) that accommodates the electrode assembly (120), the case (110) including an opening at at least one side; and
a cap plate (130) that seals the opening,
wherein the case (110) comprises:
an inner wall (111);
an outer wall (112) spaced apart from and surrounding the inner wall (111);
a space portion between the inner wall (111) and the outer wall (112); and
a connection wall (113) connecting the inner wall (111) and the outer wall (112), the connection wall (113) sealing an upper end of the space portion.

2. The secondary battery (100) according to claim 1, wherein the case (110) comprises:
a first port (210) through which a liquid flows in and out; and
a second port (220) through which a gas flows in and out.

3. The secondary battery (100) according to claim 1 or 2, wherein the first port (210) is on one side surface of the outer wall (112).

4. The secondary battery (100) according to claim 2 or 3, wherein the first port (210) is on a bottom surface of the outer wall (112).

5. The secondary battery (100) according to any of claims 2 to 4, wherein the second port (220) is on the connection wall (113).

6. The secondary battery (100) according to any of claims 2 to 5, wherein the cap plate (130) comprises a third port (230) connected to the second port (220).

7. A secondary battery module (1000, 1100), comprising:
a plurality of secondary batteries (100);
a plurality of liquid supply tanks (300) configured to supply a liquid to cases (110) of the respective plurality of secondary batteries (100); and
a flow path (400) connected to the cases (110) of the respective plurality of secondary batteries (100), the flow path (400) communicating with an outside,
wherein each of the plurality of secondary batteries (100) comprises:
an electrode assembly (120);
a case (110) that accommodates the electrode assembly (120), the case (110) including an opening at at least one side; and
a cap plate (130) that seals the opening, and
wherein the case (110) comprises:
an inner wall (111);
an outer wall (112) spaced apart from and surrounding the inner wall (111);
a space portion between the inner wall (111) and the outer wall (112); and
a connection wall (113) connecting the inner wall (111) and the outer wall (112), the connection wall (113) sealing an upper end of the space portion.

8. The secondary battery module (1000, 1100) according to claim 7, wherein the case (110) comprises:
a first port (210) connected to any one of the plurality of liquid supply tanks (300), a liquid flowing in and out of the first port (210); and
a second port (220) connected to the flow path (400), a gas flowing in and out of the second port (220).

9. The secondary battery module (1000, 1100) according to claim 7 or 8, wherein the cap plate (130) comprises a third port (230) connected to the second port (220), and the flow path (400) is connected to the third port (230).

10. The secondary battery module (1000, 1100) according to any of claims 7 to 9, further comprising a sealing member between the flow path (400) and the third port (230).

11. The secondary battery module (1000, 1100) according to any of claims 7 to 10, wherein a bottom surface of the case (110) of each of the plurality of secondary batteries (100) is at a level lower than an upper surface of the plurality of liquid supply tanks (300).

12. The secondary battery module (1000, 1100) according to any of claims 7 to 11, wherein:
the plurality of liquid supply tanks (300) are at a lower end of the plurality of secondary batteries (100), and
the plurality of liquid supply tanks (300) each comprise a lift (310) controlling a flow rate of the liquid supplied to the case (110).

13. The secondary battery module (1000, 1100) according to any of claims 7 to 12, further comprising a valve (320) controlling a flow rate of a gas supplied through the flow path (400).

14. The secondary battery module (1000, 1100) according to any of claims 7 to 13, further comprising a measuring unit (330) configured to measure at least one of a pressure and a temperature of each of the plurality of secondary batteries (100).

15. The secondary battery module (1000, 1100) according to claim 14, further comprising a battery management system (500) that monitors and manages an operating state of the plurality of secondary batteries (100) based on at least one of the pressure and the temperature measured by the measuring unit (330).
